# EUROPEAN PATENT SPECIFICATION

(11) **EP 1 980 078 B1**
(45) Date of publication and mention of the grant of the patent: **19.08.2009**
(21) Application number: 06708015.0
(22) Date of filing: 03.02.2006
(51) Int. Cl.: H04L 29/06

(54) **METHOD AND APPARATUS FOR USE IN A COMMUNICATIONS NETWORK**
VERFAHREN UND VORRICHTUNG ZUR VERWENDUNG IN EINEM KOMMUNIKATIONSNETZ
PROCÉDÉ ET APPAREIL À UTILISER UN RÉSEAU DE COMMUNICATION

(43) Date of publication of application: 15.10.2008
(73) Proprietor: Telefonaktiebolaget LM Ericsson (publ), 16483 Stockholm (SE)
(72) Inventor: ÅBERG, Fredrik, 02400 Kyrkslätt (FI); LEHTOMÄKI, Harri, 02340 Espoo (FI); KARLSSON, Nils, 02440 Bobäck (FI); SUIHKO, Timo, FI-02230 Espoo (FI)
(74) Representative: Sjöberg, Mats Hakan
(86) International application number: PCT/EP2006/050666
(87) International publication number: WO 2007/087901

(56) References cited:
- US-A1- 2003 235 213
- US-A1- 2006 067 221

## Description

### BACKGROUND OF THE INVENTION

### 1. Field of the Invention

The present invention relates to a method and apparatus for use in a communications network, for example in a Universal Mobile Telecommunications System, particularly where interoperating with an IP Multimedia Subsystem.

### 2. Description of the Related Art

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

By way of background, UMTS (Universal Mobile Telecommunications System) is a third generation wireless system designed to provide higher data rates and enhanced services to subscribers. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packets switch transmissions well beyond the 64kbps limit of ISDN through the GSM call network, which is a necessity for UMTS data transmission rates of up to 2Mbps. UMTS is standardised by the 3^{rd} Generation Partnership Project (3GPP) which is a conglomeration of regional standards bodies such as the European Telecommunication Standards Institute (ETSI), the Association of Radio Industry Businesses (ARIB) and others. See 3GPP TS 23.002 for more details.

The standardisation of UMTS has progressed in phases. The first phase was known as Release '99. The Release '99 specifications define the basic architecture that consists of the UMTS Terrestrial Radio Access Network (UTRAN), Circuit Switched Core Network (CS-CN) and Packet Switched Core Network (PS-CN). The release '99 specification offers traditional circuit as well as packet-switched services. The next phase in the standardisation process was Release 4, adding new services to the '99 architecture. Release 5 represented a significant shift, offering both traditional telephony as well as packet-switched services over a single converged packet-based network.

The UMTS Release 5 architecture added a new subsystem known as the IP Multimedia Subsystem (IMS) to the PS-CN for supporting traditional telephony as well as new multimedia services. IMS provides IP Multimedia services over mobile communication networks (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

Specific details of the operation of a UMTS communications network and of the various components within such a network can be found from the Technical Specifications for UMTS which are available from http://www.3gpp.org.

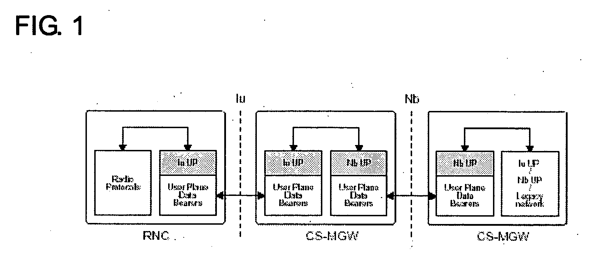

In a Universal Mobile Telecommunications System (UMTS) network, the "user plane" is used to carry data streams of user-generated information such as speech or data. The user plane consists of both the actual user generated data streams and the data bearers used to transport the data streams. It is important to understand how user plane protocols work, as besides transporting speech they also carry valuable information regarding the quality of the connection. The interoperability of the Iu (3GPP TS 25.415) and Nb (3GPP TS 29.415) user plane protocols is shown in Figure 1 of the accompanying drawings. The Iu user plane protocol is used to transfer Radio Access Bearers (RABs) containing user generated data on the Iu interface between the UMTS Terrestrial Radio Access Network (UTRAN) and the UMTS Core Network (CN); for CS services this would be between the Radio Network Controller (RNC) of the UTRAN and the Circuit Switched Media Gateway (CS-MGw) of the CS-CN. The Nb user plane protocol is used on the Nb interface within the CS-CN between the CS-MGws. The functionality inside the Iu and the Nb user plane protocols is identical for the most part. The major difference is that the protocols are used on different interfaces.

With reference to Figure 1, the RNC transforms the user plane protocols used in the RNC into an Iu user plane format, and uses a data bearer to transport the Iu frames to the CN. The CS-MGw terminates the Iu frames sent by the RNC and possibly processes the payload. Finally, the CS-MGw frames the payload into an Nb user plane format and sends it to another CS-MGw in the CN. The Iu and Nb user plane protocols are designed to be data bearer independent. This means that the user plane can be easily adapted to use different transport technologies.

Iu and Nb user plane protocols allow the sending entity to include in the frame header a sequence number and a checksum calculated over the contents of the frame. When the peer Iu/Nb protocol entity receives the frame, it first checks the header checksum and discards the frame if the checksum is bad. If the header checksum is correct, but the payload is damaged, the frame's FQC field is set to "Bad". This information can be used to estimate speech quality, and lost frames can be detected based on the frame number field in the frame header (only Iu/Nb frames with PDU Type 0 and PDU Type 1 are used to carry speech, so speech quality estimation can ignore all the PDU Type 14 control frames).

These protocols may use a frame number with values from 0 to 15 that can be based on time. The frame number is incremented by one at each new time interval (and after value 15 the value 0 is again used). For example, for the Adaptive Multi-Rate (AMR) codec (3GPP TS 26.102) the frame number is stepped at each new 20ms interval. The frame number may be useful at the receiver to know the timing of the frame, e.g. when the frame should be played out, especially when there is big delay variation in the network.

### SUMMARY OF THE INVENTION

According to a first aspect of the present invention there is provided a method for use by a gateway node of a telecommunications network that is arranged to receive frames from a source node for onward transmission towards a destination node, the frames including respective frame numbers for use in correctly sequencing and/or timing the frames at the destination node, and the method comprising, when it is determined that a potential or actual discontinuity in frame numbering has occurred that might cause incorrect sequencing and/or timing at the destination node of frames numbered subsequent to the discontinuity in relation to frames numbered prior to the discontinuity, sending a discontinuity indication towards the destination node to notify the destination node of the potential or actual discontinuity.

The frame numbers may be generated and included in their respective frames at the source node.

The method may comprise including the discontinuity indication in at least one of the subsequent frames sent towards the destination node.

The method may comprise including the discontinuity indication in at least the first subsequent frame.

The method may comprise including the discontinuity indication only in the first subsequent frame.

The source node may be one of a plurality of such source nodes, and the method may comprise determining that a potential or actual discontinuity in frame numbering has occurred when the source node from which the gateway node is receiving frames changes from one source node to another of the plurality.

The frames may derive from a further node of the network. The further node may be a mobile node.

The telecommunications network may be a Universal Mobile Telecommunications System.

The or each source node may comprise a Radio Network Controller.

Frames received from the source node may be sent in the Iu User Plane.

Frames sent from the gateway node may be sent in the Nb User Plane.

The frames may be PDU type 0 or PDU type 1 frames.

The discontinuity indication may be included in a spare extension part of such a PDU type 0 or PDU type 1 frame.

The spare extension part may comprise at least one bit of a spare octet.

The discontinuity indication may be sent in a control message. The control message may be a PDU type 14 frame.

The method may comprise determining that a potential or actual discontinuity in frame numbering has occurred when a Serving Radio Network Subsystem relocation happens.

The mobile node may be a User Equipment.

The gateway node may comprise a Media Gateway. The gateway node need not be the first gateway node in the communications path following the source node.

The method may comprise transmitting frames towards the destination node via a further gateway node.

The frame numbers may provide information relating to the timing of their respective frames. The destination node and/or the further gateway node may use the frame numbers to generate timing information relating to their respective frames. The further gateway node may include such timing information in the frames transmitted onwards towards the destination node, instead of or as well as the corresponding respective frame numbers. Frames need not be numbered according to a sequential scheme, or a scheme requiring translation of frame numbers into timing information. For example, frame numbers may indicate more directly the timing of their respective frames.

The method may comprise determining whether such a potential or actual discontinuity in frame numbering has occurred.

The destination node may be a node of an IP Multimedia Subsystem.

According to a second aspect of the present invention there is provided an apparatus for use as a gateway node of a telecommunications network that is arranged in use to receive frames from a source node for onward transmission towards a destination node, the frames including respective frame numbers for use in correctly sequencing and/or timing the frames at the destination node, and the apparatus comprising means for sending, when it is determined that a potential or actual discontinuity in frame numbering has occurred that might cause incorrect sequencing and/or timing at the destination node of frames numbered subsequent to the discontinuity in relation to frames numbered prior to the discontinuity, a discontinuity indication towards the destination node to notify the destination node of the potential or actual discontinuity.

According to a third aspect of the present invention there is provided an operating program which, when run on an apparatus, causes the apparatus to carry out a method according to the first aspect of the present invention.

According to a fourth aspect of the present invention there is provided an operating program which, when loaded into an apparatus, causes the apparatus to become an apparatus according to the second aspect of the present invention.

The operating program may be carried on a carrier medium. The carrier medium may be a transmission medium. The carrier medium may be a storage medium.

### BRIEF DESCRIPTION OF THE DRAWINGS

Figure 1, discussed hereinbefore, illustrates schematically various nodes in a call chain within a UMTS network;
Figure 2 is a generic diagram for use in illustrating both a problem with interworking of known UMTS protocols with the IMS, and also how this problem is addressed with an embodiment of the present invention;
Figure 3 illustrates schematically the flow of frames across the parts illustrated in Figure 2, and illustrates frame numbers both before and after Serving Radio Network Subsystem relocation;
Figure 4 shows a general PDU type 0 frame that is used in one embodiment of the present invention to convey information relating to frame numbering; and
Figure 5 shows a PDU type 0 frame more particularly when used in one embodiment of the present invention to convey information relating to frame numbering.

### DETAILED DESCRIPTION OF THE PREFERRED EMBODIMENTS

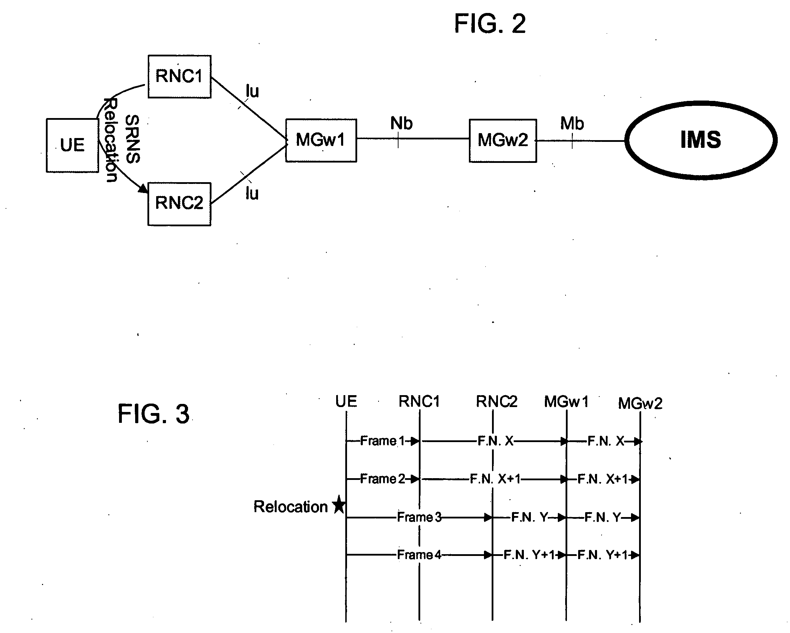

The applicants have identified the following potential problem with the above-described existing frame numbering system used in the Iu and Nb protocols. When the network entity that is generating the frame numbers changes, the frame numbers will typically start from a new random position, because the new network entity will typically not have information concerning the frame number that the old source was using at the time when the switch occurred. This may happen, for example, at a Serving Radio Network Subsystem (SRNS) relocation situation, where the changing network entity is the RNC. This situation will now be explained further with reference to Figures 2 and 3.

Figure 2 illustrates schematically a UE relocating from RNC1 to RNC2, with RNC1 and RNC2 being in communication with MGw1 using the Iu protocol, which in turn is in communication with MGw2 using the Nb protocol, which itself is a gateway to the IMS. Figure 3 illustrates schematically the flow of frames (e.g. speech frames) between the parts illustrated in Figure 2, the frames originating from the UE, and shows example frame numbers both before and after SRNS relocation.

Before the relocation event, the RNC1 receives frames 1 and 2 in turn from the UE, and generates sequential frame numbers X and X+1 for inclusion in respective Iu frames sent onward to the MGw1. The frame numbers are for use in correctly sequencing and/or timing the frames at the intended destination node. The MGw1 includes these frame numbers in the corresponding respective Nb frames sent to the MGw2 (which in turn uses these frame numbers to generate timing information for frames with data sent onward to the IMS).

After frame 2, a relocation event occurs such that the UE is communicating with RNC2 instead of RNC1 from frame 3. The RNC2 would generally have no knowledge of the frame sequence that RNC1 was using, and therefore starts frame number sequencing independently from a position Y instead of position X+2 as it ideally would for continuity with the previous frame numbering (there are no frame numbers sent from the UE to the RNCs that could be used either). A discontinuity in frame numbering has therefore occurred that might cause incorrect sequencing and/or timing, at the destination node, of frames numbered subsequent to the occurrence of the discontinuity in relation to frames numbered prior to the discontinuity.

The MGw2 also does not have information that an SRNS relocation has occurred. If MGw2 relies on the frame number being based on time, then it will make a wrong decision 15 times out of 16 for the timing. As the MGw2 is sending the data in the frames onward towards the IMS, it will be sending wrong information in the RTP timestamp (see IETF RFC 3550, "RTP: A Transport Protocol for Real-Time Applications"). This is against the IETF RTP specification. A possible consequence of this is that the timing of the playout of frames may be changed, leading to quality problems, for example for a Voice over Internet Protocol (VoIP) service.

It might be considered that, to address this issue, RNC2 would simply need information on the last frame number used by RNC1. However, to handle the correct timing of this would be difficult to achieve practically.

It might also be considered to address this issue by keep the frame number consistent at the MGw1, such that MGw1 would correct the numbering when it is determined that RNC2 is using an "incorrect" frame number sequence. However, this would require that MGW2 modifies each packet from RNC2, and this would consume extra capacity; also it would not be in accordance with the TrFO principle to be transparent to the frames.

The above-mentioned issue would instead addressed according to an embodiment of the present invention by sending an indication (a "discontinuity indication") from the MGw1 when it determines that a new frame number sequence has been started, so that a user of the frame number is able to determine whether or not the frame number can be relied upon. Such a discontinuity indication is sent towards the intended destination node in order to notify the destination node of a potential or actual discontinuity in frame numbering that might cause incorrect sequencing and/or timing, at the destination node, of frames numbered subsequent to the discontinuity in relation to frames numbered prior to the discontinuity.

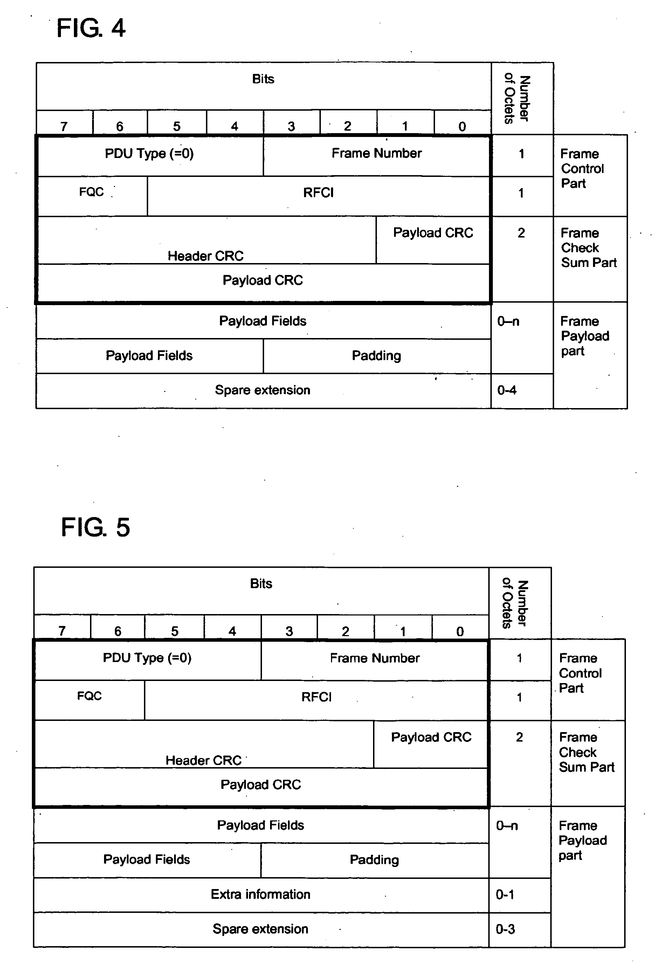

One embodiment of the present invention makes use for this purpose of a spare extension field provided at the end of a PDU type 0 or PDU type 1 frame for data sent in the Iu and Nb User Plane (see 3GPP TS 25.415). By way of illustration, Figure 4 shows a PDU type 0 frame having the spare extension at the end, comprising up to four octets. A receiver would typically ignore the spare extension if it does not have the capability to understand it.

Figure 5 shows the use of one of the spare extension octets in an embodiment of the present invention to send an indication of when a new frame number sequence is started (discontinuity). One bit of the extra information field (for example, bit seven) is set to 1 to indicate when the frame number has started from a new position, leaving the remaining bits available for other purposes. When the frame number is not started from a new position (no discontinuity), which would generally be the most common situation, the extra information octet need not be present. However, if certain bits of the spare extension are being used for other purposes, then the bit allocated for the frame number indication would simply be set to 0.

For an SRNS relocation, the MGw that performs switching from the old RNC to the new RNC indicates when it has performed the switch using the extra information field, with the correct bit set as appropriate, in the first frame that uses the new frame number.

It will be appreciated that there are alternative methods for sending the indication. For example, it may be sent in a separate control message, for example a PDU type 14 frame (see 3GPP TS 25.415, "UTRAN Iu interface user plane protocols"). Either a new procedure for this indication can be provided, or the new information can be added to an existing procedure, e.g. rate control. A skilled person would fully appreciate how such an indication can be provided in many different ways.

With an embodiment of the present invention, a receiver is able to use the frame number for timing information more reliably. This has benefits to the service quality, e.g. speech quality.

Also, when an UMTS network is interoperating with an IMS network, a correct RTP timestamp (see IETF RFC 3550) must be used in the IMS network, so as not to produce problems e.g. for playout of a VoIP service. With the extra information relating to a potential or actual discontinuity in the frame numbering according to an embodiment of the present invention, the RTP timestamp can be set correctly, and therefore the service quality can be improved, e.g. for connections from UMTS to IMS. This has relevance to the 3GPP TS 29.163 ("Interworking between the IP Multimedia (IM) Core Network (CN) subsystem and Circuit Switched (CS) networks") and 3GPP TS 29.415 amongst others.

Although an embodiment of the present invention is described above in the context of a UMTS network interoperating with an IMS network, it will be appreciated that notification of a potential or actual discontinuity in frame numbering in a manner corresponding to that described above will have relevance to other types of communications networks.

It will be appreciated that operation of one or more of the above-described components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

## Claims

1. A method for use by a gateway node of a telecommunications network that is arranged to receive frames from a source node for onward transmission towards a destination node, the frames including respective frame numbers for use in correctly sequencing and/or timing the frames at the destination node, and the method comprising, when it is determined that a potential or actual discontinuity in frame numbering has occurred that might cause incorrect sequencing and/or timing at the destination node of frames numbered subsequent to the discontinuity in relation to frames numbered prior to the discontinuity, sending a discontinuity indication towards the destination node to notify the destination node of the potential or actual discontinuity.

2. A method as claimed in any preceding claim, wherein the frame numbers are generated and included in their respective frames at the source node.

3. A method as claimed in any preceding claim, comprising including the discontinuity indication in at least one of the subsequent frames sent towards the destination node.

4. A method as claimed in claim 3, comprising including the discontinuity indication in at least the first subsequent frame.

5. A method as claimed in claim 4, comprising including the discontinuity indication only in the first subsequent frame.

6. A method as claimed in any preceding claim, wherein the source node is one of a plurality of such source nodes, and comprising determining that a potential or actual discontinuity in frame numbering has occurred when the source node from which the gateway node is receiving frames changes from one source node to another of the plurality.

7. A method as claimed in any preceding claim, wherein the frames derive from a further node of the network.

8. A method as claimed in claim 7, wherein the further node is a mobile node.

9. A method as claimed in any preceding claim, wherein the telecommunications network is a Universal Mobile Telecommunications System.

10. A method as claimed in claim 9, wherein the or each source node comprises a Radio Network Controller.

11. A method as claimed in claim 9 or 10, wherein frames received from the source node are sent in the Iu User Plane.

12. A method as claimed in claim 9, 10 or 11, wherein frames sent from the gateway node are sent in the Nb User Plane.

13. A method as claimed in any one of claims 9 to 12, wherein the frames are PDU type 0 or PDU type 1 frames.

14. A method as claimed in claim 13, when dependent on claim 3, wherein the discontinuity indication is included in a spare extension part of such a PDU type 0 or PDU type 1 frame.

15. A method as claimed in claim 14, wherein the spare extension part comprises at least one bit of a spare octet.

16. A method as claimed in any one of claims 9 to 15, wherein the discontinuity indication is sent in a control message.

17. A method as claimed in claim 16, wherein the control message is a PDU type 14 frame.

18. A method as claimed in any one of claims 9 to 17, when dependent on claim 6, comprising determining that a potential or actual discontinuity in frame numbering has occurred when a Serving Radio Network Subsystem relocation happens.

19. A method as claimed in any one of claims 9 to 18, when dependent on claim 8, wherein the mobile node is a User Equipment.

20. A method as claimed in any one of claims 9 to 19, wherein the gateway node comprises a Media Gateway.

21. A method as claimed in any preceding claim, comprising transmitting frames towards the destination node via a further gateway node.

22. A method as claimed in any preceding claim, comprising determining whether such a potential or actual discontinuity in frame numbering has occurred.

23. A method as claimed in any preceding claim, wherein the destination node is a node of an IP Multimedia Subsystem.

24. An apparatus for use as a gateway node of a telecommunications network that is arranged in use to receive frames from a source node for onward transmission towards a destination node, the frames including respective frame numbers for use in correctly sequencing and/or timing the frames at the destination node, and the apparatus comprising means for sending, when it is determined that a potential or actual discontinuity in frame numbering has occurred that might cause incorrect sequencing and/or timing at the destination node of frames numbered subsequent to the discontinuity in relation to frames numbered prior to the discontinuity, a discontinuity indication towards the destination node to notify the destination node of the potential or actual discontinuity.

25. An operating program which, when run on an apparatus, causes the apparatus to carry out a method as claimed in any one of claims 1 to 23.

26. An operating program which, when loaded into an apparatus, causes the apparatus to become an apparatus as claimed in claim 24.

27. An operating program as claimed in claim 25 or 26, carried on a carrier medium.

28. An operating program as claimed in claim 27, wherein the carrier medium is a transmission medium.

29. An operating program as claimed in claim 27, wherein the carrier medium is a storage medium.

## Patentansprüche

1. Ein Verfahren zur Verwendung durch einen Gateway-Knoten eines Telekommunikationsnetzwerks, das angeordnet ist zum Empfangen von Rahmen von einem Ursprungsknoten für eine Vorwärtsübertragung in Richtung eines Zielknotens, wobei die Rahmen entsprechende Rahmennummern enthalten zur Verwendung beim korrekten Ordnen und/oder zeitlichen Einteilen der Rahmen bei dem Zielknoten, und das Verfahren umfasst, wenn bestimmt wird, dass eine potentielle oder tatsächliche Diskontinuität in der Rahmennummerierung aufgetreten ist, die ein falsches Ordnen und/oder zeitliches Einteilen bei dem Zielknoten der Rahmen hervorrufen kann, die nachfolgend nummeriert sind zu der Diskontinuität in Beziehung zu den Rahmen, die vor der Diskontinuität nummeriert sind, Senden einer Diskontinuitäts-Indikation in Richtung des Zielknotens zum Mitteilen der potentiellen oder tatsächlichen Diskontinuität an den Zielknoten.

2. Ein Verfahren wie in einem vorhergehenden Anspruch beansprucht, wobei die Rahmennummern erzeugt werden und enthalten sind in ihren entsprechenden Rahmen bei dem Ursprungsknoten.

3. Ein Verfahren wie in einem vorhergehenden Anspruch beansprucht, umfassend ein Enthalten der Diskontinuitäts-Indikation in mindestens einem der nachfolgenden Rahmen, die in Richtung des Zielknotens gesendet werden.

4. Ein Verfahren wie in Anspruch 3 beansprucht, umfassend ein Enthalten der Diskontinuitäts-Indikation in mindestens dem ersten nachfolgenden Rahmen.

5. Ein Verfahren wie in Anspruch 4 beansprucht, umfassend ein Enthalten der Diskontinuitäts-Indikation nur in dem ersten nachfolgenden Rahmen.

6. Ein Verfahren wie beansprucht in einem vorhergehenden Anspruch, wobei der Ursprungsknoten einer ist einer Vielzahl von solchen Ursprungsknoten, und umfasst ein Bestimmen, dass eine potentielle oder tatsächliche Diskontinuität in der Rahmennummerierung aufgetreten ist, wenn der Ursprungsknoten, von dem der Gateway-Knoten Rahmen empfängt, von einem Ursprungsknoten zu einem anderen der Vielzahl wechselt.

7. Ein Verfahren wie in einem vorhergehenden Anspruch beansprucht, wobei die Rahmen sich von einem weiteren Knotennetzwerk ableiten.

8. Ein Verfahren wie in Anspruch 7 beansprucht, wobei der weitere Knoten ein Mobilknoten ist.

9. Ein Verfahren wie in einem vorhergehenden Anspruch beansprucht, wobei das Telekommunikationsnetzwerk ein universelles Mobiltelekommunikationssystem ist.

10. Ein Verfahren, wie in Anspruch 9 beansprucht, wobei der oder jeder Ursprungsknoten einen Funknetzwerk-Controller umfasst.

11. Ein Verfahren wie in Anspruch 9 oder 10 beansprucht, wobei Rahmen, empfangen von dem Ursprungsknoten, gesendet werden in der Iu-Benutzerebene.

12. Ein Verfahren wie in Anspruch 9, 10 oder 11 beansprucht, wobei Rahmen, gesendet von dem Gateway-Knoten, gesendet werden in der Nb-Benutzerebene.

13. Ein Verfahren wie in einem der Ansprüche 9 bis 12 beansprucht, wobei die Rahmen PDU-Typ-0- oder PDU-Typ-1-Rahmen sind.

14. Ein Verfahren wie in Anspruch 13 beansprucht, wenn abhängig von Anspruch 3, wobei die Diskontinuitäts-Indikation enthalten ist in einem Ersatzerweiterungsteil von solch einem PDU-Typ-0- oder PDU-Typ-1-Rahmen.

15. Ein Verfahren wie in Anspruch 14 beansprucht, wobei das Ersatzerweiterungsteil mindestens ein Bit eines Ersatzoktetts umfasst.

16. Ein Verfahren wie in einem der Ansprüche 9 bis 15 beansprucht, wobei die Diskontinuitäts-Indikation gesendet wird in einer Steuernachricht.

17. Ein Verfahren wie beansprucht in Anspruch 16, wobei die Steuernachricht ein PDU-Typ-14-Rahmen ist.

18. Ein Verfahren wie in einem der Ansprüche 9 bis 17 beansprucht, wenn abhängig von Anspruch 6, umfassend ein Bestimmen, dass eine potentielle oder tatsächliche Diskontinuität der Rahmennummerierung aufgetreten ist, wenn eine Neulokalisierung eines Dienenden-Funknetzwerkuntersystems auftritt.

19. Ein Verfahren wie einem der Ansprüche 9 bis 18 beansprucht, wenn abhängig von Anspruch 8, wobei der Mobilknoten ein Benutzergerät ist.

20. Ein Verfahren wie in einem der Ansprüche 9 bis 19 beansprucht, wobei der Gateway-Knoten ein Media-Gateway umfasst.

21. Ein Verfahren wie in einem vorhergehenden Anspruch beansprucht, umfassend ein Übertragen von Rahmen in Richtung des Zielknotens über einen weiteren Gateway-Knoten.

22. Ein Verfahren wie in einem vorhergehenden Anspruch beansprucht, umfassend ein Bestimmen, ob solch eine potentielle oder tatsächliche Diskontinuität in der Rahmennummerierung aufgetreten ist.

23. Ein Verfahren wie in einem vorhergehenden Anspruch beansprucht, wobei der Zielknoten ein Knoten eines IP-Multimedia-Untersystems ist.

24. Eine Vorrichtung zur Verwendung eines Gateway-Knotens eines Telekommunikationsnetzwerks, der angeordnet ist zur Verwendung zum Empfangen von Rahmen von einem Ursprungsknoten für eine Vorwärtsübertragung in Richtung eines Zielknotens, wobei die Rahmen entsprechende Rahmennummern enthalten zur Verwendung beim korrekten Ordnen und/oder zeitlichen Einteilen der Rahmen bei dem Zielknoten, und die Vorrichtung Mittel umfasst, wenn es bestimmt wird, dass eine potentielle oder tatsächliche Diskontinuität beim Rahmennummerieren aufgetreten ist, die ein falsches Ordnen und/oder zeitliches Einteilen bei dem Zielknoten der Rahmen hervorrufen kann, die nachfolgend zu der Diskontinuität nummeriert sind in Beziehung zu Rahmen, die vor der Diskontinuität nummeriert sind, zum Senden einer Diskontinuitäts-Indikation in Richtung des Zielknotens zum Mitteilen der potentiellen oder tatsächlichen Diskontinuität an den Zielknoten.

25. Ein Betriebsprogramm, das, wenn es auf einer Vorrichtung abläuft, die Vorrichtung dazu bringt, ein Verfahren wie in einem der Ansprüche 1 bis 23 beansprucht, auszuführen.

26. Ein Betriebsprogramm, das, wenn in eine Vorrichtung geladen, die Vorrichtung dazu bringt, eine Vorrichtung wie in Ansprüche 24 beansprucht, zu werden.

27. Ein Betriebsprogramm wie in Anspruch 25 oder 26 beansprucht, das auf einem Trägermedium getragen wird.

28. Ein Betriebsprogramm wie in Anspruch 27 beansprucht, wobei das Trägermedium ein Übertragungsmedium ist.

29. Ein Betriebsprogramm wie in Anspruch 27 beansprucht, wobei das Trägermedium ein Speichermedium ist.

## Revendications

1. Procédé destiné à être utilisé dans un noeud passerelle d'un réseau de télécommunications qui est conçu pour recevoir des trames d'un noeud de source en vue de leur réacheminement vers un noeud de destination, les trames incluant des numéros respectifs de trame destinés à être utilisés pour assurer correctement le classement et/ou la synchronisation des trames sur le noeud de destination, le procédé comprenant, lorsqu'il est déterminé qu'une discontinuité potentielle ou réelle s'est produite dans la numérotation des trames et peut entraîner un classement et/ou une synchronisation incorrect, sur le noeud de destination, des trames portant des numéros postérieurs à la discontinuité, par rapport à des trames portant des numéros antérieurs à la discontinuité, l'envoi d'une indication de discontinuité au noeud de destination afin d'informer le noeud de destination de la discontinuité potentielle ou réelle.

2. Procédé selon l'une quelconque des revendications précédentes, dans lequel les numéros de trames sont produits et insérés dans les trames respectives sur le noeud de source.

3. Procédé selon l'une quelconque des revendications précédentes, comprenant l'inclusion de l'indication de discontinuité dans au moins une des trames suivantes envoyées vers le noeud de destination.

4. Procédé selon la revendication 3, comprenant l'inclusion de l'indication de discontinuité dans au moins la première trame suivante.

5. Procédé selon la revendication 4, comprenant l'inclusion de l'indication de discontinuité uniquement dans la première trame suivante.

6. Procédé selon l'une quelconque des revendications précédentes, dans lequel le noeud de source est un noeud parmi une pluralité de tels noeuds de source, et comprenant l'étape consistant à déterminer qu'une discontinuité potentielle ou réelle s'est produite dans la numérotation des trames lorsque le noeud de source dont le noeud passerelle reçoit des trames change d'un noeud de source à un autre noeud de la pluralité.

7. Procédé selon l'une quelconque des revendications précédentes, dans lequel les trames proviennent d'un autre noeud du réseau.

8. Procédé selon la revendication 7, dans lequel l'autre noeud est un noeud mobile.

9. Procédé selon l'une quelconque des revendications précédentes, dans lequel le réseau de télécommunications est un réseau UMTS, pour « *Universal Mobile Telecommunications System* » - Système universel de télécommunication mobile.

10. Procédé selon la revendication 9, dans lequel le noeud de source ou chaque noeud de source est constitué d'un contrôleur de réseau radio.

11. Procédé selon la revendication 9 ou 10, dans lequel des trames reçues du noeud de source sont envoyées sur le plan utilisateur Iu.

12. Procédé selon la revendication 9, 10 ou 11, dans lequel des trames envoyées par le noeud passerelle sont envoyées sur le plan utilisateur Nb.

13. Procédé selon l'une quelconque des revendications 9 à 12, dans lequel les trames sont des trames PDU de type 0 ou des trames PDU de type 1.

14. Procédé selon la revendication 13, lorsque celle-ci dépend de la revendication 3, dans lequel l'indication de discontinuité est incluse dans une partie d'extension réservée de cette trame PDU de type 0 ou PDU de type 1.

15. Procédé selon la revendication 14, dans lequel la partie d'extension réservée comprend au moins un bit dans un octet réservé.

16. Procédé selon l'une quelconque des revendications 9 à 15, dans lequel l'indication de discontinuité est envoyée dans un message de commande.

17. Procédé selon la revendication 16, dans lequel le message de commande est une trame PDU de type 14.

18. Procédé selon l'une quelconque des revendications 9 à 17, lorsque celle-ci dépend de la revendication 6, comprenant l'étape consistant à déterminer qu'une discontinuité potentielle ou réelle s'est produite dans la numérotation des trames lorsqu'il se produit une relocalisation du sous-système de réseau radio de desserte.

19. Procédé selon l'une quelconque des revendications 9 à 18, lorsque celle-ci dépend de la revendication 8, dans lequel le noeud mobile est un équipement d'utilisateur.

20. Procédé selon l'une quelconque des revendications 9 à 19, dans lequel le noeud passerelle est constitué d'une passerelle de contenus.

21. Procédé selon l'une quelconque des revendications précédentes, comprenant l'émission de trames vers le noeud de destination via un autre noeud passerelle.

22. Procédé selon l'une quelconque des revendications précédentes, comprenant l'étape consistant à déterminer si une telle discontinuité potentielle ou réelle s'est produite dans la numérotation des trames.

23. Procédé selon l'une quelconque des revendications précédentes, dans lequel le noeud de destination est un noeud d'un sous-système multimédia IP.

24. Appareil destiné à être utilisé comme noeud passerelle d'un réseau de télécommunications qui est conçu pour recevoir des trames d'un noeud de source en vue de leur réacheminement vers un noeud de destination, les trames incluant des numéros respectifs de trame destinés à être utilisés pour assurer correctement le classement et/ou la synchronisation des trames sur le noeud de destination, l'appareil comprenant un moyen destiné, lorsqu'il est déterminé qu'une discontinuité potentielle ou réelle s'est produite dans la numérotation des trames et peut entraîner un classement et/ou une synchronisation incorrect, sur le noeud de destination, des trames portant des numéros postérieurs à la discontinuité, par rapport à des trames portant des numéros antérieurs à la discontinuité, à envoyer une indication de discontinuité au noeud de destination afin d'informer le noeud de destination de la discontinuité potentielle ou réelle.

25. Programme d'exploitation qui, lorsqu'il est exécuté sur un appareil, fait que l'appareil exécute un procédé selon l'une quelconque des revendications 1 à 23.

26. Programme d'exploitation qui, lorsqu'il est chargé dans un appareil, fait que l'appareil devient un appareil selon la revendication 24.

27. Programme d'exploitation selon la revendication 25 ou 26, transporté sur un support de transport.

28. Programme d'exploitation selon la revendication 27, dans lequel le support de transport est un support de transmission.

29. Programme d'exploitation selon la revendication 27, dans lequel le support de transport est un support de stockage.
